# EUROPEAN PATENT APPLICATION

(11) **EP 1 530 161 A2**
(43) Date of publication of application: **11.05.2005**
(21) Application number: 04256617.4
(22) Date of filing: 27.10.2004
(51) Int. Cl.: G06T 9/00

(54) **Motion vector generation and encoding**

(30) Priority: 04.11.2003 JP 2003373847
(71) Applicant: Sony Corporation, Tokyo (JP)
(72) Inventor: Sato, Kazushi, c/o Sony Corporation, Tokyo (JP); Tsuchiya, Toshiharu, c/o Sony Corporation, Tokyo (JP); Seki, Takahito, c/o Sony Corporation, Tokyo (JP); Yagasaki, Yoichi, c/o Sony Corporation, Tokyo (JP)
(74) Representative: Leppard, Andrew John

(57) **Abstract**

A data processing apparatus capable of encoding all motion compensation block data, wherein, when generating for example a motion vector MV of a motion compensation block data A in macro block data MB_X, when the motion vectors MV of the motion compensation block data B₁, B₂, and B₃ at the periphery of that are not generated, a predictive vector generation unit of a motion prediction and compensation circuit generates a predictive motion vector PMV of the motion compensation block data A by using already generated motion vectors MV of motion compensation block data C₁, C₂, and C₃ in the adjacent macro block data MB_Y in place of them.

## Description

### BACKGROUND OF THE INVENTION

### 1. Field of the Invention

The present invention relates to a data processing apparatus for generating a motion vector of moving picture data and a method and an encoding device of the same.

### 2. Description of the Related Art

In recent years, apparatuses designed based on the MPEG (Moving Picture Experts Group) or other system for handling image data digitally and at that time transmitting and storing information with a high efficiency by compressing the image data by applying a discrete cosine transform or other orthogonal transform and motion compensation utilizing the redundancy peculiar to image information have spread in use for both distribution of information by broadcast stations etc. and reception of information at the general home.

As a followup to the MPEG system, H.264/AVC (Advanced Video Coding) encoding system for realizing a further higher compression rate has been proposed. The H.264/AVC system, in the same way as the MPEG, performs motion prediction and compensation based on a motion vector. When an encoding device of the H.264/AVC system searches for (generates) a motion vector in a predetermined search range of reference image data in units of motion compensation block data MCB, however, it generates a predictive motion vector PMV by using the motion vectors MV already generated for other motion compensation block data adjacent to the motion compensation block data MCB in question. Then, the encoding device generates the motion vector MV of the motion compensation block data so as to reduce the amount of information of the predictive motion vector PMV.

In a conventional encoding device, however, when generating the predictive motion vector PMV, sometimes the motion vectors of the adjacent other motion compensation block data have not yet been generated due to the timing of the pipeline processing etc. In such case, there are problems that the predictive motion vector PMV cannot be generated and the motion compensation block data cannot be encoded.

### SUMMARY OF THE INVENTION

Embodiments of the invention seek to provide a data processing apparatus which, when generating a motion vector of first motion compensation block data to be processed in moving picture data by using motion vectors of second motion compensation block data having predetermined positional relationships with respect to the first motion compensation block data, is capable of generating the motion vector of the first motion compensation block data even when the motion vectors of the second motion compensation block data are not yet generated and a method and an encoding device of the same.

The first aspect of the invention provides a data processing apparatus for generating a motion vector of a first motion compensation block data to be processed in a moving image data by using a motion vector of a second motion compensation block having a predetermined positional relationship between the first motion compensation block data, said data processing apparatus comprising, a generating means for generating the motion vector of the first motion compensation block data by using a motion vector of a third motion compensation block data which is already generated and has a predetermined relationship of position between the first motion compensation block data in place of the motion vector of the second motion compensation block data when the motion vector of the second motion compensation block data have not been yet generated at the time of generating the motion vector of the first motion compensation block data.

The mode of operation of the data processing apparatus of an embodiment of the invention is as follows. When the generating means generates a motion vector of first motion compensation block data and motion vectors of second motion compensation block data have not been yet generated, it uses the already generated motion vectors of third motion compensation block data which have predetermined positional relationships with respect to the first motion compensation block data in place of the motion vectors of the second motion compensation block data so as to generate the motion vector of the first motion compensation block data.

A second aspect of the invention provides a method of data processing for generating a motion vector of a first motion compensation block data to be processed in a moving image data by using a motion vector of a second motion compensation block having a predetermined positional relationship between the first motion compensation block data, said data processing method comprising: a first step for judging whether or not the motion vector of the second motion compensation block data have not been yet generated at the time of generating the motion vector of the first motion compensation block data; a second step for generating the motion vector of the first motion compensation block data by using a motion vector of the second motion compensation block data when it decided at the first step that the motion vector of the second motion compensation block data have already been generated; and a third step for generating the motion vector of the first motion compensation block data by using a motion vector of a third motion compensation block data which is already generated and has a predetermined relationship of position between the first motion compensation block data in place of the motion vector of the second motion compensation block data when it decided at the first step that the motion vector of the second motion compensation block data have not been yet generated

The mode of operation of the data processing method of an embodiment of the invention is as follows. First, at the first step, it decides when generating a motion vector of first motion compensation block data whether motion vectors of second motion compensation block data have not yet been generated. Next, at the second step, when it decided at the first step that the motion vectors of the second motion compensation block data have been already generated, it uses the motion vectors of the second motion compensation block data to generate the motion vector of the first motion compensation block data. Next, at the third step, when it decided at the first step that the motion vectors of the second motion compensation block data have not yet been generated, it uses already generated motion vectors of third motion compensation block data which have predetermined positional relationships with respect to the first motion compensation block data in place of the motion vectors of the second motion compensation block data so as to generate the motion vector of the first motion compensation block data.

A third aspect of the invention provides an encoding device for encoding a moving image, comprising: a motion predicting and compensating means for generating a motion vector of a first motion compensation block data in the moving image by using a motion vector of a third motion compensation block data which have already been generated and have a predetermined positional relationship between the first motion compensation block data in place of the motion vector of a second motion compensation block data having a predetermined positional relationship between the first motion compensation block data, when the motion vector of the second motion compensation block data have not been yet generated at the time of generating the motion vector of the first motion compensation block data and generating a predictive image data on the basis of the generated motion vector; and an encoding means for encoding the motion vector generated by the motion predicting and compensation means and a difference between the moving image data and the predictive image data.

The mode of operation of the encoding device of an embodiment of the invention is as follows. First, when a motion predicting and compensating means generates a motion vector of first motion compensation block data in moving picture data and motion vectors of second motion compensation block data which have predetermined positional relationships with respect to the first motion compensation block data have not yet been generated, it uses already generated motion vectors of third motion compensation block data which have predetermined positional relationships with respect to the first motion compensation block data in place of the motion vectors of the second motion compensation block data so as to generate the motion vector of the first motion compensation block data and generates predicted image data based on the motion vector. Next, the encoding means encodes the motor vector generated by the motion predicting and compensating means and the difference between the moving picture data and the predicted image data.

A fourth aspect of the invention provides a data processing apparatus for generating a motion vector of a first motion compensation block data to be processed in a moving image data by using a motion vector of a second motion compensation block having a predetermined positional relationship between the first motion compensation block data, said data processing apparatus comprising, a thinning means for thinning a first reference image data to generate a second reference image data and a generating means for searching in the second reference image data to generate a first motion vector of the first motion compensation block data and searching in a searching range prescribed by the first motion vector in the first reference image data to generate a second motion vector of the first motion compensation block data, wherein the generating means generates the second motion vector of the first motion compensation block data by using the second motion vector of the second motion compensation block data when the second motion vector have already been generated and generates the second motion vector of the first motion compensation block data by using the first motion vector of the second motion compensation block data.

The mode of operation of the data processing apparatus of an embodiment of the invention is as follows. First, a thinning means thins first reference image data of the moving picture data to generate second reference image data. Then, the generating means searches through the second reference image data generated by the thinning means to generate a first motion vector of the first motion compensation block data. Then, the generating means searches through the search range prescribed by the first motion vector in the first reference image data to generate a second motion vector of the first motion compensation block data. At this time, when the second motion vector of the second motion compensation block data has been already generated, the generating means uses the second motion vector to generate the second motion vector of the first motion compensation block data, while when the second motion vector of the second motion compensation block data has not yet been generated, uses the first motion vector of the second motion compensation block data to generate the second motion vector of the first motion compensation block data.

A fifth aspect of the invention provides a method of data processing for generating a motion vector of a first motion compensation block data to be processed in a moving image data by using a motion vector of a second motion compensation block having a predetermined positional relationship between the first motion compensation block data, the method comprising, a first step thinning a first reference image data to generate a second reference image data; a second step for searching in the second reference image data generate by the first step to generate a first motion vector of the first motion compensation block data; and a third step for searching in a searching range prescribed by the first motion vector generated by the second step in the first reference image data to generate a second motion vector of the first motion compensation block data; wherein in the third step, the second motion vector of the first motion compensation block data is generated by using the second motion vector of the second motion compensation block data when the second motion vector have already been generated and the second motion vector of the first motion compensation block data is generated by using the first motion vector of the second motion compensation block data.

The mode of operation of the data processing method of an embodiment of the invention is as follows. First, at the first step, it thins first reference image data of moving picture data to generate second reference image data. Next, at the second step, it searches through the second reference image data generated at the first step to generate a first motion vector of the first motion compensation block data. Next, at the third step, it searches through the search range prescribed by the first motion vector generated at the second step in the first reference image data to generate a second motion vector of the first motion compensation block data. At this time, when the second motion vector of the second motion compensation block data has been already generated at the third step, it uses the second motion vector to generate the second motion vector of the first motion compensation block data, while when the second motion vector of the second motion compensation block data has not yet been generated, it uses the first motion vector of the second motion compensation block data to generate the second motion vector of the first motion compensation block data.

A sixth aspect of the invention provides an encoding device for generating a motion vector of a first motion compensation block data to be processed in a moving image data by using a motion vector of a second motion compensation block having a predetermined positional relationship between the first motion compensation block data and encoding the moving image data by using the motion vector, the encoding device comprising, a thinning means for thinning a first reference image data to generate a second reference image data; a generating means for searching in the second reference image data to generate a first motion vector of the first motion compensation block data and searching in a searching range prescribed by the first motion vector in the first reference image data to generate a second motion vector of the first motion compensation block data; and a predictive image generating means for generating a predictive image data on the basis of the second motion vector generated by the generating means; and an encoding means for encoding the second motion vector generated by generating means and a difference between the moving image data and the predictive image data by the predictive image generating means; wherein the generating means generates the second motion vector of the first motion compensation block data by using the second motion vector of the second motion compensation block data when the second motion vector have already been generated and generates the second motion vector of the first motion compensation block data by using the first motion vector of the second motion compensation block data.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
FIG. 1 is a view of the configuration of a communication system according to a first embodiment of the present invention;
FIG. 2 is a functional block diagram of an encoding device shown in FIG. 1;
FIG. 3 is a view of the configuration of a motion prediction and compensation circuit shown in FIG. 2;
FIG. 4 is a view for explaining the types of sizes of motion compensation blocks used in the motion prediction and compensation circuit shown in FIG. 2;
FIG. 5 is a view for explaining a method for searching for a motion vector in the motion prediction and compensation circuit shown in FIG. 2;
FIG. 6 is a view for explaining a method of generation of a predictive motion vector prescribed by H.264/AVC;
FIG. 7 is a view for explaining the operation of a predictive vector generation unit shown in FIG. 3;
FIGS. 8A and B are views for explaining a processing timing of the encoding device shown in FIG. 2;
FIG. 9 is a view for explaining another operation of the predictive vector generation unit shown in FIG. 3;
FIG. 10 is a flow chart for explaining an example of the operation of the predictive vector generation unit shown in FIG. 3;
FIG. 11 is a flow chart continuing from FIG. 10 for explaining an example of the operation of the predictive vector generation unit shown in FIG. 3;
FIG. 12 is a view of the configuration of the motion prediction and compensation circuit shown in FIG. 2 according to a second embodiment of the present invention; and
Figs. 13A and B are views for explaining the processing timing of the motion prediction and compensation circuit shown in FIG. 2 according to the second embodiment of the present invention.

### DESCRIPTION OF THE PREFERRED EMBODIMENTS

Below, an explanation will be given of encoding devices of the H.264/AVC system according to embodiments of the present invention.

### First Embodiment

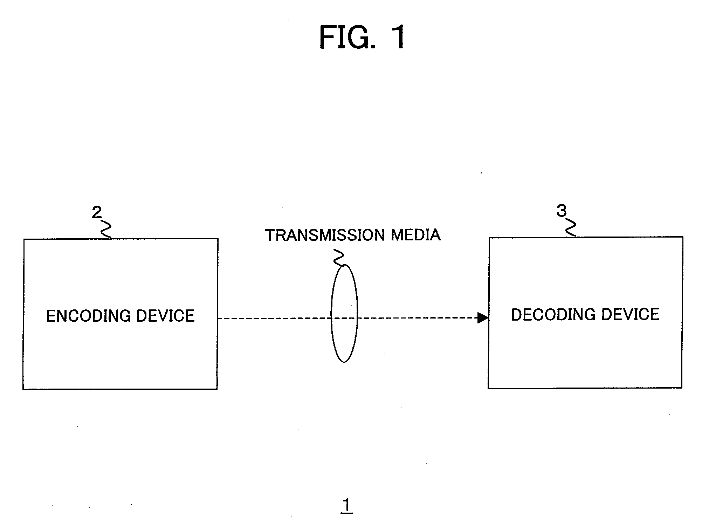

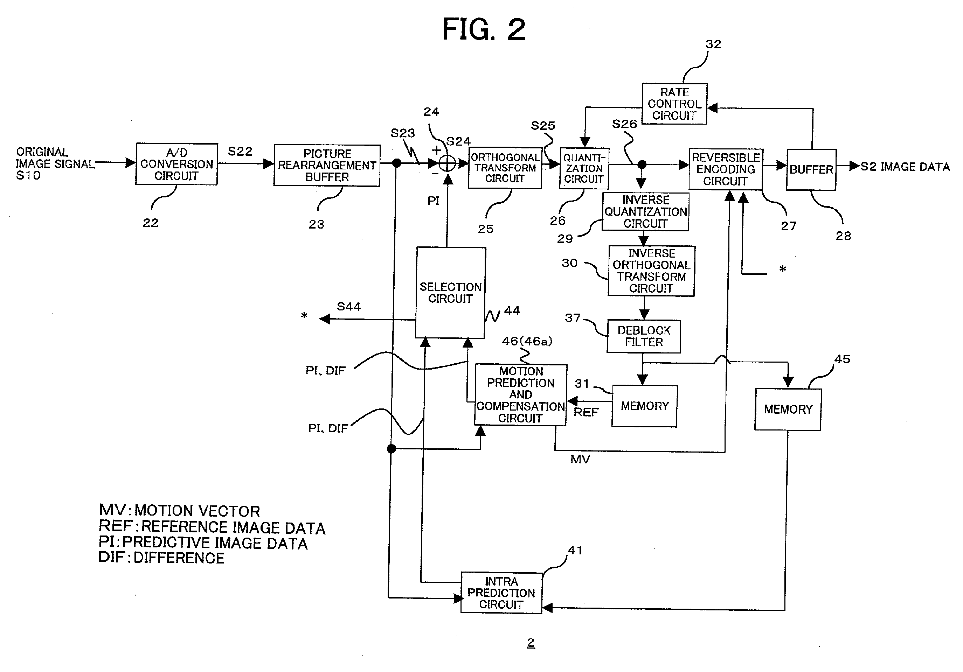

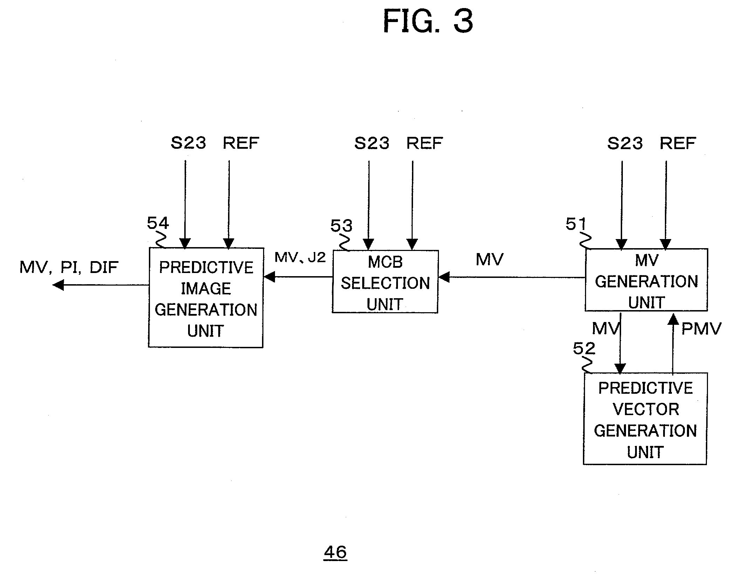

Below, an embodiment of the present invention will be explained by referring to FIG. 1 to FIG. 11. First, an explanation will be given of the correspondence between components of the present invention and components of the present embodiment. The first embodiment corresponds to the first to third aspects of the invention. An encoding device 2 shown in FIG. 1 and FIG. 2 corresponds to the encoding device of the third aspect of the invention, and a motion prediction and compensation circuit 46 shown in FIG. 2 and FIG. 3 corresponds to the data processing apparatus of the first aspect of the invention and the motion predicting and compensating means of the third aspect of the invention. Further, an MV generation unit 51 and a predictive vector generation unit 52 shown in FIG. 3 correspond to the generating means of the first aspect of the invention. Further, a processing circuit 24 and a reversible encoding circuit 27 correspond to the encoding means of the third aspect of the invention. Further, a motion compensation block data MCB of the present embodiment corresponds to the block data of the present invention.

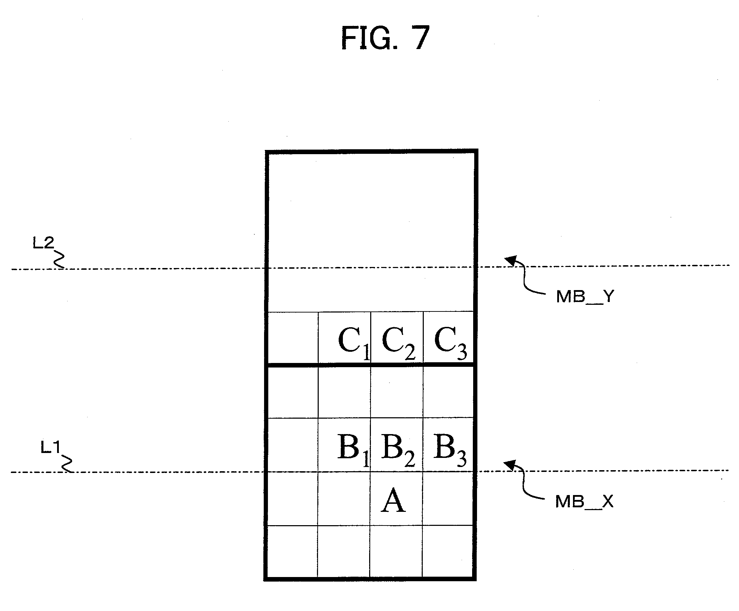

Next, an explanation will be given of characteristic features of the motion prediction and compensation circuit 46 by referring to FIG. 3. For example, when generating a predictive motion vector PMV of motion compensation block data A in macro block data MB_X shown in FIG. 7, when motion vectors MV of motion compensation block data B₁, B₂, and B₃ on the periphery thereof are not generated, the predictive vector generation unit 52 of the motion prediction and compensation circuit 46 shown in FIG. 3 uses already generated motion vectors MV of motion compensation block data C₁, C₂, and C₃ in the adjacent macro block data MB_Y in place of them to generate the predictive motion vector PMV of the motion compensation block data A.

Below, a detailed explanation will be given of a communication system 1 of the first embodiment. FIG. 1 is a conceptual view of the communication system 1 of the present embodiment. As shown in FIG. 1, the communication system 1 has an encoding device 2 provided on the transmission side and a decoding device 3 provided on the reception side. The communication system 1 generates frame image data (bit stream) compressed by an orthogonal transform such as a discrete cosine transform or Karhunen-Loeve transform and the motion compensation in the encoding device 2 on the transmission side, modulates the frame image data, then transmits the same via a transmission medium such as a satellite broadcast wave, cable TV network, telephone line network, or portable telephone line network. The reception side demodulates the received image signal, then generates the frame image data expanded by the inverse transform of the orthogonal transform at the time of the above modulation and the motion compensation for use. Note that the above transmission medium may be a recording medium such as an optical disc, magnetic disc, or semiconductor memory as well. The decoding device 3 shown in FIG. 1 performs the decoding corresponding to the encoding of the encoding device 2.

Below, an explanation will be given of the encoding device 2 shown in FIG. 1. FIG. 2 is a view of the overall configuration of the encoding device 2 shown in FIG. 1. As shown in FIG. 2, the encoding device 2 has for example an A/D conversion circuit 22, a picture rearrangement buffer 23, a processing circuit 24, an orthogonal transform circuit 25, a quantization circuit 26, a reversible encoding circuit 27, a buffer 28, an inverse quantization circuit 29, an inverse orthogonal transform circuit 30, a frame memory 31, a rate control circuit 32, a deblock filter 37, an intra prediction circuit 41, a selection circuit 44, a frame memory 45, and a motion prediction and compensation circuit 46. The encoding device 2 realizes part of the processing thereof by pipeline processing.

Below, an explanation will be given of the components of the encoding device 2. The A/D conversion circuit 22 converts an original image signal S10 comprised of an input analog luminance signal Y and color difference signals Pb and Pr to digital frame data S22 and outputs this to the picture rearrangement buffer 23. The picture rearrangement buffer 23 outputs frame data S23 obtained by rearranging the frame data S22 input from the A/D conversion circuit 22 to the encoding sequence in accordance with GOP (Group Of Pictures) structure comprised of picture types I, P, and B thereof to the processing circuit 24, the intra prediction circuit 41, and the motion prediction and compensation circuit 46.

The processing circuit 24 generates image data S24 indicating the difference between the frame data S23 and the predictive image data PI input from the selection circuit 44 and outputs this to the orthogonal transform circuit 25. The orthogonal transform circuit 25 applies an orthogonal transform such as a discrete cosine transform or Karhunen-Loeve transform to the image data S24 to generate image data (for example DCT coefficient) S25 and outputs this to the quantization circuit 26. The quantization circuit 26 quantizes the image data S25 with a quantization scale input from the rate control circuit 32 to generate image data S26 and outputs this to the reversible encoding circuit 27 and the inverse quantization circuit 29.

The reversible encoding circuit 27 stores the image data obtained by variable length encoding or arithmetic encoding of the image data S26 in the buffer 28. At this time, when the selection data S44 indicates that inter prediction encoding was selected, the reversible encoding circuit 27 encodes the motion vector MV input from the motion prediction and compensation circuit 46 and stores this in the header data.

The image data stored in the buffer 28 is modulated, then transmitted. The inverse quantization circuit 29 generates the signal obtained by inverse quantizing of the image data S26 and outputs this to the inverse orthogonal transform circuit 30. The inverse orthogonal transform circuit 30 outputs the image data generated by applying the inverse transform of the orthogonal transform in the orthogonal transform circuit 25 to the image data input from the inverse quantization circuit 29 to the deblock filter 37. The deblock filter 37 writes the image data cleared of block distortion of the image data input from the inverse orthogonal transform circuit 30 into the frame memories 31 and 45. The rate control circuit 32 generates a quantization scale based on the image data read out from the buffer 23 and outputs this to the quantization circuit 26.

The intra prediction circuit 41 applies intra prediction encoding to each macro block data MB composing the image data read out from the frame memory 45 based on each of the intra prediction modes prescribed in advance by for example H.264/AVC to generate the predictive image and detects difference DIF between the predictive image data and the frame data S23. Then, the intra prediction circuit 41 outputs the predictive image data PI by the intra prediction mode corresponding to the minimum difference among the above differences generated for each of the above plurality of intra prediction modes and the difference DIF to the selection circuit 44.

The selection circuit 44 compares the difference DIF input from the intra prediction circuit 41 and the difference DIF input from the motion prediction and compensation circuit 46. When deciding that the difference DIF input from the intra prediction circuit 41 is smaller by the comparison, the selection circuit 44 selects the predictive image data PI input from the intra prediction circuit 41 and outputs this to the processing circuit 24. When deciding that the difference DIF input from the motion prediction and compensation circuit 46 is smaller by the above comparison, the selection circuit 44 selects the predictive image data PI input from the motion prediction and compensation circuit 46 and outputs this to the processing circuit 24. Further, the selection circuit 44 outputs selection data S44 indicating that the inter prediction encoding was selected to the reversible encoding circuit 27 when selecting the predictive image data PI from the intra prediction circuit 41, while outputs the selection data S44 indicating that the intra prediction encoding was selected to the reversible encoding circuit 27 when selecting the predictive image data PI from the motion prediction and compensation circuit 46.

Below, an explanation will be given of the motion prediction and compensation circuit 46. FIG. 3 is a view of the configuration of the motion prediction and compensation circuit 46 shown in FIG. 2. As shown in FIG. 3, the motion prediction and compensation circuit 46 has for example an MV generation unit 51, a predictive vector generation unit 52, an MCB selection unit 53, and a predictive image generation unit 54. When macro block data MB are linked with a plurality of two-dimensional regions located in a matrix and composing one picture, the motion prediction and compensation circuit 46 sequentially performs the motion prediction and compensation processing of the macro block data MB for each line composing the matrix. Namely, the motion prediction and compensation circuit 46 performs the motion prediction and compensation processing of the macro block data MB for each line in accordance with for example the sequence of the raster scanning of the picture.

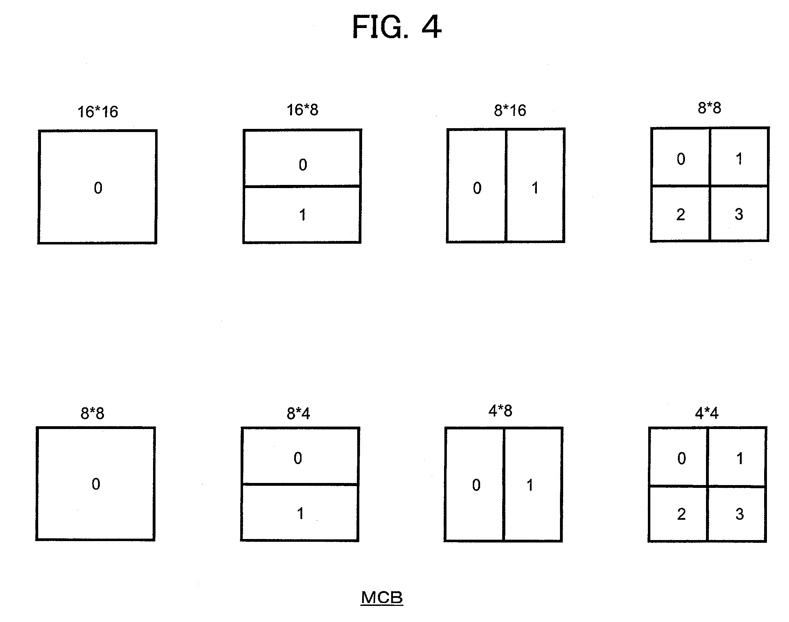

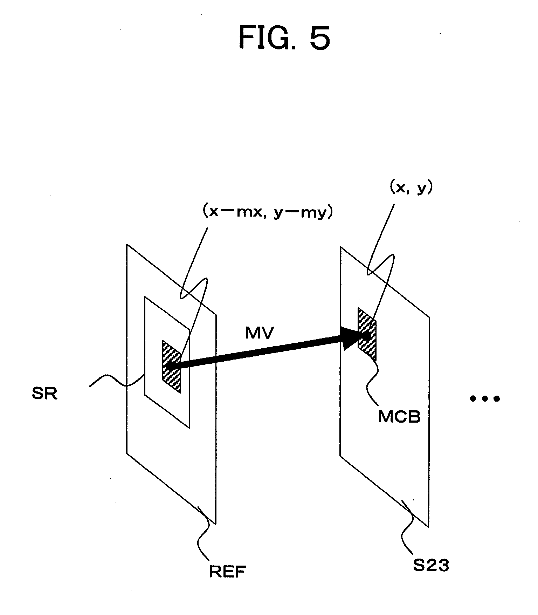

The MV generation unit 51 calculates index data SAD in accordance with the sum of differences among pixel data between the designated motion compensation block data MCB and the motion compensation block data MCB in the search range SR of the reference image data REF from the frame memory 31 as shown in FIG. 5 in units of the designated motion compensation block data MCB among a plurality of motion compensation block data MCB having different sizes shown in FIG. 4 for each macro block data MB in the frame data S23 from the picture rearrangement buffer 23. Further, the MV generation unit 51 generates information amount data R indicating the amount of the information of the difference motion vector DMV between the predictive vector PMV from the predictive vector generation unit 52 and the motion vector MV in accordance with the position of the motion compensation block data MCB in the search range SR of the reference image data REF. Then, the MV generation unit 51 searches for the motion compensation block data MCB minimizing the data J1 indicating the sum of the index data SAD and the information amount data R in the search range SR of the reference image data REF and generates the motion vector MV in accordance with the position of the found motion compensation block data MCB.

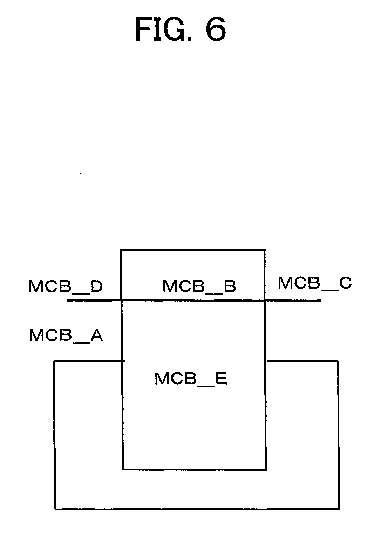

The predictive vector generation unit 52 generates for example the predictive motion vector PMV of the motion compensation block data MCB which is covered by the processing in the MV generation unit 51. Here, an explanation will be given of the predictive motion vector PMV of the motion compensation block data MCB prescribed by the H.264/AVC. In the H.264/AVC, for example the predictive motion vector PMV of the motion compensation block data MCB_E shown in FIG. 6 is generated based on the motion vectors MV of the motion compensation block data MCB_A, B, C located on the periphery of and having predetermined positional relationships with respect to the motion compensation block data MCB_E. As mentioned above, when generating the predictive motion vector PMV of the motion compensation block data MCB_E shown in FIG. 6, sometimes the motion vectors MV of the motion compensation block data MCB_A, B, C are not yet generated depending on the timing of the pipeline processing of the motion prediction and compensation circuit 46.

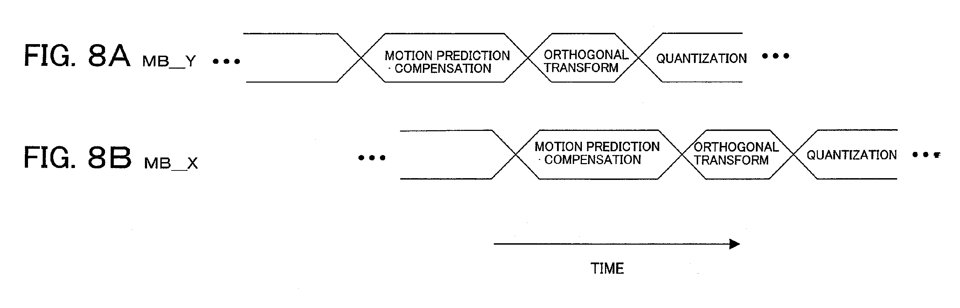

For example, when the motion vectors MV of the motion compensation block data MCB having the predetermined positional relationships determined in advance with respect to the motion compensation block data MCB for which the predictive motion vector PMV is to be generated have not yet been generated, the predictive vector generation unit 52 uses the already generated motion vectors MV of other motion compensation block data MCB in place of the same. Below, a case where for example the motion compensation block data MCB to be generated of the predictive motion vector PMV (hereinafter also referred to as the first motion compensation block data MCB) and the motion compensation block data MCB having predetermined positional relationships determined in advance with respect to the former (hereinafter also referred to as second motion compensation block data MCB) belong to the same macro block data MB will be considered. In this case, when generating the predictive motion vector PMV of the first motion compensation block data MCB, there is possibility that the motion vectors MV of the second motion compensation block data MCB have not yet been generated. Namely, in the example shown in FIG. 7, when the predictive vector generation unit 52 generates the predictive motion vector PMV of the first motion compensation block data A, sometimes the motion vectors MV of the second motion compensation blocks B₁, B₂, and B₃ have not yet been generated. On the other hand, when the processings of the macro block data MB_X and MB_Y shown in FIG. 7 are performed by pipeline processing at the timing shown in FIG. 8, when generating the predictive motion vector PMV of the first motion compensation block A in the macro block data MB_X, the motion vectors MV of the motion compensation block data MCB belonging to the macro block data MB_Y have been already generated. In this case, for example as shown in FIG. 7, when the second motion vector compensation blocks B₁, B₂, and B₃ are located at the second line L2 side (upper side) subjected to motion prediction and compensation processing before the first line L1 at which the macro block data MB_X (second macro block data of embodiments of the present invention) including these motion compensation blocks A, B₁, B₂, and B₃ is located with respect to the first motion compensation block A and in addition the second motion vectors B₁, B₂, and B₃ have not yet been generated, the predictive vector generation unit 52 uses the third motion compensation blocks C₁, C₂, and C₃ adjacent to the macro block data MB_X in the macro block data MB_Y (first macro block data of embodiments of the present invention) on the second line L2 to generate the predictive motion vector PMV of the first motion compensation block A.

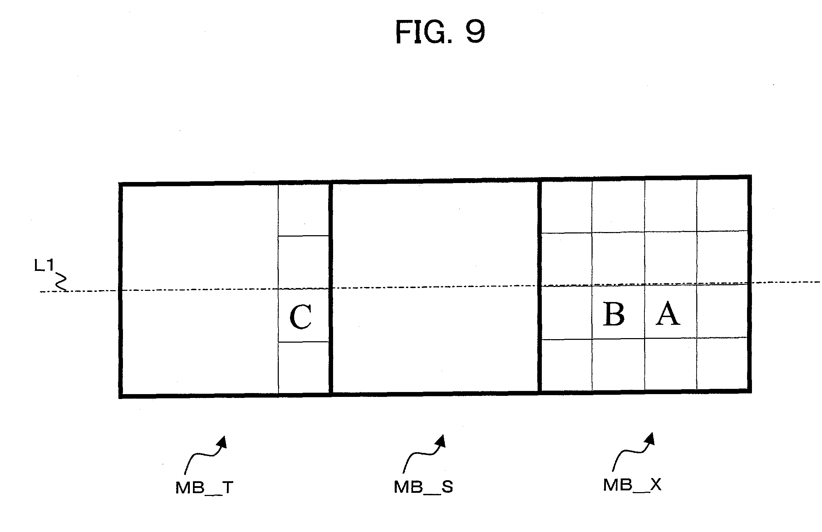

In the same way as above, as shown in FIG. 9, when the predictive vector generation unit 52 generates the predictive motion vector PMV of the first motion compensation block A in the macro block data MB_X on the line L1, sometimes the motion vectors MV of the second motion compensation block B existing on the macro block data MB_S side with respect to the first motion compensation block A have not yet been generated. Here, the motion prediction and compensation circuit 46 performs the motion prediction and compensation processing in the sequence of the macro block data MB_T, MB_S, and MB_X shown in FIG. 9. On the other hand, when generating the predictive motion vector PMV of the first motion compensation block A at the timing of the pipeline processing, the motion vectors MV of the motion compensation block data MCB belonging to the macro block data MB_T located on the line L1 via the macro block data MB_S have been already generated. In this case, the predictive vector generation unit 52 uses the third motion compensation block C adjacent to the macro block data MB_S in the macro block data MB_T as shown in FIG. 9 to generate the predictive motion vector PMV of the first motion compensation block A.

The MCB selection unit 53 generates the predetermined index data J2 based on the motion vectors MV input from the MV generation unit 51 and selects the motion vector MV of the motion compensation block data MCB minimizing the index data J2 among the motion compensation block data MCB shown in FIG. 4. Further, the MCB selection unit 56 outputs the selected motion vector MV and the data indicating the type of the motion compensation block data MCB corresponding to that to the predictive image generation unit 54.

The predictive image generation unit 54 generates the predictive image data PI by using the reference image data REF based on the motion vector MV and the data indicating the type of the MCB input from the MCB selection unit 53. Further, the predictive image generation unit 54 generates the difference DIF between the frame data S23 and the predictive image data PI.

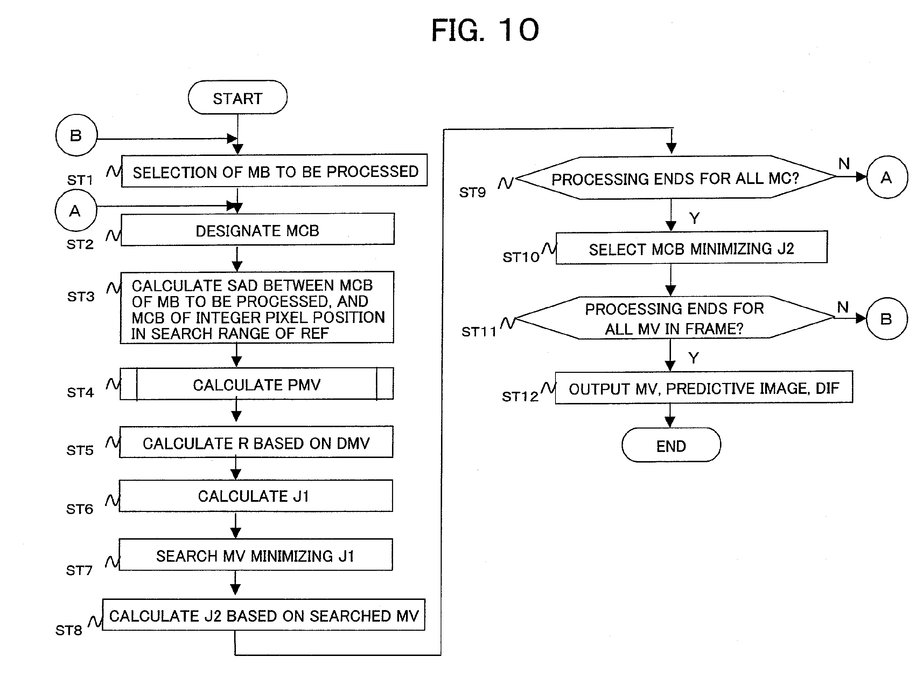

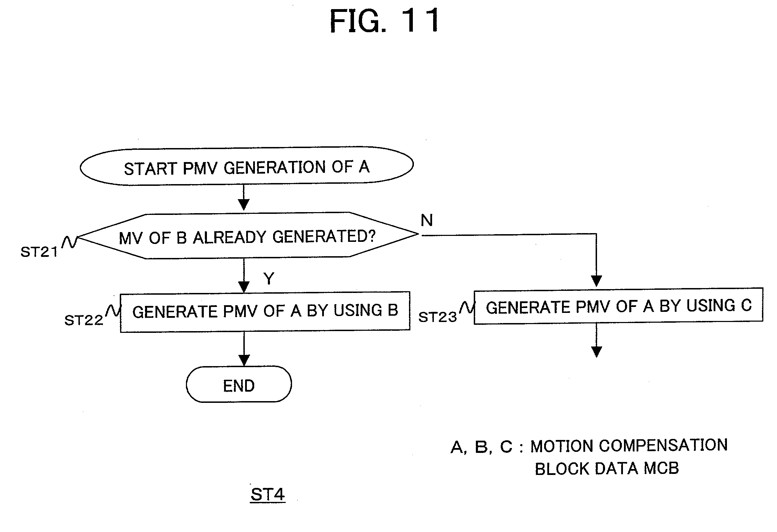

Below, an explanation will be given of an example of operation of the motion prediction and compensation circuit 46. FIG. 10 and FIG. 11 are flow charts for explaining this example of operation.

### Step ST1

The motion prediction and compensation circuit 46 selects the unprocessed macro block data MB in the frame data S23 input from the picture rearrangement buffer 23 as the processing object.

### Step ST2

The motion prediction and compensation circuit 46 designates not designated motion compensation block data MCB among the motion compensation block data MCB shown in FIG. 4.

### Step ST3

The MV generation unit 51 calculates the index data SAD indicating the sum of differences among pixel data between the motion compensation block data MCB and the motion compensation block data MCB in the search range SR of the reference image data REF from the frame memory 31 as shown in FIG. 5 in units of the motion compensation block data MCB selected at step ST2 for each macro block data MB in the frame data S23 from the picture rearrangement buffer 23.

### Step ST4

The predictive vector generation unit 52 calculates the predictive motion vector PMV of the motion compensation block data MCB to be processed based on the already generated motion vectors MV of the other motion compensation block data MCB.

### Step ST5

The MV generation unit 51 calculates the information amount data R indicating the amount of information of the difference motion vectors DMV between the predictive vector PMV from the predictive vector generation unit 52 and the motion vectors MV in accordance with the position of the motion compensation block data MCB in the search range SR of the reference image data REF.

### Step ST6

The MV generation unit 51 calculates the index data J1 indicating the sum of the index data SAD calculated at step ST3 and the information amount data R calculated at step ST5.

### Step ST7

The MV generation unit 51 searches for the motion compensation block data MCB minimizing the index data J1 calculated at step ST6 in the search range SR of the reference image data REF, specifies the motion vector MV in accordance with the position of the found motion compensation block data MCB, and outputs this to the MCB selection unit 53.

### Step ST8

The MCB selection unit 53 performs the predetermined processing based on the motion vector MV input at step ST7, calculates the index data J2 indicating the value in accordance with the sum of differences between pixel data of the frame data S23 and the image data obtained by recomposition based on the motion vector MV, and outputs this to the predictive image generation unit 54 together with the motion vector MV.

### Step ST9

The MCB selection unit 53 decides whether or not processings of steps ST2 to ST8 were carried out for all motion compensation block data MCB shown in FIG. 4 and, when they were not carried out, makes the components perform the processings of above steps ST2 to ST8 for the unselected motion compensation block data MCB. On the other hand, when the MCB selection unit 53 decides that the processings of steps ST2 to ST8 were carried out for all motion compensation block data MCB shown in FIG. 4, the routine proceeds to step ST10.

### Step ST10

The MCB selection unit 53 specifies the minimum index data among the index data J2 calculated at step ST8 for all motion compensation block data MCB shown in FIG. 4 and outputs the motion vector MV corresponding to the specified index data J2 and the data indicating the type of the motion compensation block data MCB corresponding to that to the predictive image generation unit 54.

### Step ST11

The predictive image generation unit 54 decides whether or not processings of all macro block data MB in the frame data S23 input from the picture rearrangement buffer 23 ended. If ended, the routine proceeds to step ST12, when if not, the routine returns to step ST1.

### Step ST12

The predictive image generation unit 54 uses the reference image data REF to generate the predictive image data PI based on the motion vector MV and the data indicating the type of the motion compensation block data MCB input from the MCB selection unit 53 for all macro block data MB composing the frame data S23. Further, the predictive image generation unit 54 generates the difference DIF between the frame data S23 and the predictive image data PI and outputs this to the selection circuit 44. Further, the predictive image generation unit 54 outputs the motion vector MV to the reversible encoding circuit 27.

Below, a detailed explanation will be given of an example of operation of the method of generation of the predictive motion vector PMV of step ST4 shown in FIG. 10. FIG. 11 is a flow chart for explaining the example of operation.

### Step ST21

The predictive vector generation unit 52 decides whether or not the motion vectors MV of the second motion compensation block data MCB having the predetermined positional relationships determined in advance with respect to the first motion compensation block data MCB for which the predictive motion vector PMV is to be generated have been already generated. When deciding that the motion vectors MV has been already generated, the routine proceeds to step ST22, while when deciding they have not, the routine proceeds to step ST23. In the example shown in FIG. 7, the predictive vector generation unit 52 decides whether or not the motion vectors MV of the second motion compensation blocks B₁, B₂, and B₃ located at the upper, upper left, and upper right positions with respect to the first motion compensation block A have been already generated when generating the predictive motion vector PMV of the first motion compensation block A.

### Step ST22

The predictive vector generation unit 52 uses the motion vectors MV of the second motion compensation block data MCB to generate the predictive motion vector PMV of the first motion compensation block data MCB. In the example shown in FIG. 7, the predictive vector generation unit 52 uses the motion vectors MV of the second motion compensation blocks B₁, B₂, and B₃ to generate the predictive motion vector PMV of the first motion compensation block A

### Step ST23

The predictive vector generation unit 52 uses the already generated motion vectors MV of the third motion compensation block data MCB in place of the motion vectors MV of the second motion compensation block data MCB to generate the predictive motion vector PMV of the first motion compensation block data MCB. In the example shown in FIG. 7, the predictive vector generation unit 52 uses, in place of the motion vectors MV of the second motion compensation blocks B₁, B₂, and B₃, the motion vectors MV of the motion compensation blocks C₁, C₂, and C₃ adjacent to the macro block data MB_X in the macro block data MB_Y located on the line L_2 subjected to motion prediction and compensation earlier than the line L_1 to which the macro block data MB_X belongs and adjacent to the macro block data MB_X so as to generate the predictive motion vector PMV of the first motion vector compensation block A.

Below, an explanation will be given of the overall operation of the encoding device 2 shown in FIG. 2. When an original image signal S10 is input, the original image signal S10 is converted to digital frame data S22 in the A/D conversion circuit 22. Next, the pictures in the frame data S22 are rearranged in the picture rearrangement buffer 23 in accordance with the GOP structure of the image compression information to be output, and the frame data S23 obtained by that is output to the processing circuit 24, the intra prediction circuit 41, and the motion prediction and compensation circuit 46. Next, the processing circuit 24 detects the difference between the frame data S23 from the picture rearrangement buffer 23 and the predictive image data PI from the selection circuit 44 and outputs the image data S24 indicating the difference to the orthogonal transform circuit 25.

Next, the orthogonal transform circuit 25 applies an orthogonal transform such as a discrete cosine transform or a Karhunen-Loeve transform to the image data S24 to generate the image data S25 and outputs this to the quantization circuit 26. Next, the quantization circuit 26 quantizes the image data S25 and outputs the quantized transform coefficient S26 to the reversible encoding circuit 27 and the inverse quantization circuit 29. Next, the reversible encoding circuit 27 applies reversible encoding such as variable length encoding or arithmetic encoding to the variable coefficient S26 to generate the image data and stores this in the buffer 28. Further, the rate control circuit 32 controls the quantization rate in the quantization circuit 26 based on the image data read out from the buffer 28.

Further, the inverse quantization circuit 29 inversely quantizes the variable coefficient S26 input from the quantization circuit 26 and outputs the inversely quantized variable coefficient to the inverse orthogonal transform circuit 30. The inverse orthogonal transform circuit 30 outputs the frame data generated by applying the inverse transform of the orthogonal transform in the orthogonal transform circuit 25 to the image data input from the inverse quantization circuit 29 to the deblock filter 37. The deblock filter 37 writes the image data cleared of block distortion of the variable coefficient input from the inverse orthogonal transform circuit 30 into the frame memories 31 and 45.

Then, the intra prediction circuit 41 performs the intra prediction coding and outputs the predictive image data PI thereof and the difference DIF to the selection circuit 44. Further, the motion prediction and compensation circuit 46 generates the motion vectors MV as explained by using FIG. 10 and FIG. 11. Further, the motion prediction and compensation circuit 46 generates the predictive image data PI and the difference DIF and outputs them to the selection circuit 44.Then, the selection circuit 44 outputs the predictive image data PI corresponding to the smaller difference DIF between the difference DIF input from the intra prediction circuit 41 and the difference DIF input from the motion prediction and compensation circuit 46 to the processing circuit 24.

As explained above, in the motion prediction and compensation circuit 46 of the encoding device 2, as explained by using FIG. 11, the predictive vector generation unit 52 uses the already generated motion vectors MV of the third motion compensation block data MCB located on the same side as the second motion compensation block data to generate the predictive motion vector PMV of the first motion compensation block data MCB when the motion vectors MV of the second motion compensation block data MCB having the positional relationships determined in advance with respect to the first motion compensation block data MCB have not yet been generated. For this reason, according to the motion prediction and compensation circuit 46, the predictive motion vector PMV of the first motion compensation block data MCB can be always generated. For this reason, according to the motion prediction and compensation circuit 46, predictive motion vectors PMV of all motion compensation block data can be generated, and all motion compensation block data can be adequately encoded.

### Second Embodiment

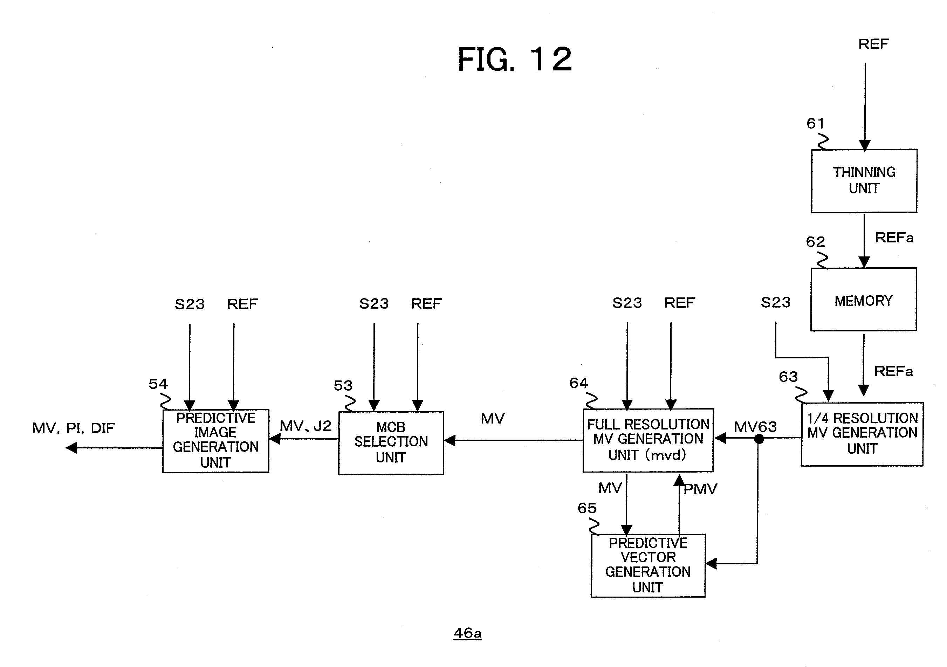

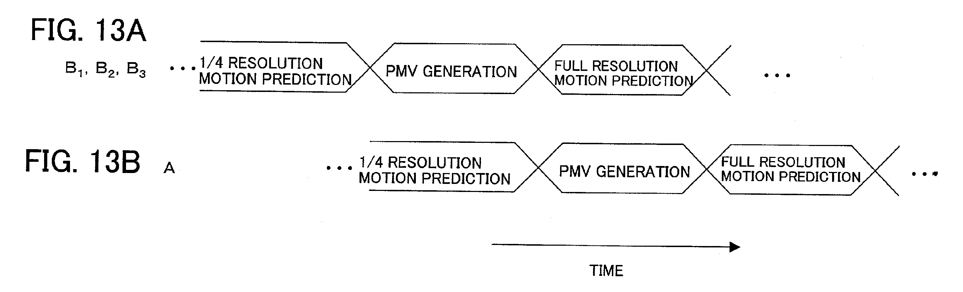

Below, an explanation will be given of a second embodiment of the present invention by using FIG. 12 and FIG. 13. This embodiment corresponds to the fourth to sixth aspects of the invention. Here, a thinning unit 61 shown in FIG. 12 corresponds to the thinning means of the fourth and sixth aspects of the invention, and a 1/4 resolution MV generation unit 63, a full resolution MV generation unit 64, and a predictive vector generation unit 65 correspond to the generating means of the fourth to sixth aspects of the invention. Further, the predictive image generation unit 54 corresponds to the predictive image generating means of the sixth aspect of the present invention, and the processing circuit 24 and the reversible encoding circuit 27 correspond to the encoding means of the sixth aspect of the present invention.

The encoding device of the present embodiment is the same as the encoding device 2 of the above first embodiment except for the processing of the motion prediction and compensation circuit 46. FIG. 12 is a view of the configuration of a motion prediction and compensation circuit 46a of the present embodiment. As shown in FIG. 12, the motion prediction and compensation circuit 46a has for example the thinning unit 61, a frame memory 62, the 1/4 resolution MV generation unit 63, the full resolution MV generation unit 64, the predictive vector generation unit 65, an MCB selection unit 53, and the predictive image generation unit 54.In FIG. 12, the MCB selection unit 53 and the predictive image generation unit 54 assigned the same notations as those of FIG. 3 are the same as those explained in the first embodiment. In the motion prediction and compensation circuit 46a, first the thinning unit 61 thins the full resolution reference image data REF read out from the frame memory 31 shown in FIG. 2 (the first reference image data of embodiments of the present invention) to generate the 1/4 resolution reference image data REFa (the second reference image data of embodiments of the present invention) and writes this into the frame memory 62. Next, the 1/4 resolution MV generation unit 63 searches for the motion vectors MV63 (the first motion vectors of embodiments of the present invention) of the motion compensation block data MCB in the frame data S23 by the 1/4 resolution based on the frame data S23 from the picture rearrangement buffer 23 and the 1/4 resolution reference image data REFa from the frame memory 62. Next, the predictive vector generation unit 65 generates for example the predictive motion vector PMV of the motion compensation block data MCB as the processing object in the full resolution MV generation unit 64. At this time, when for example the full resolution motion vectors MV (the second motion vectors of embodiments of the present invention) of the motion compensation block data MCB (the second motion compensation block data of embodiments of the present invention) having the predetermined positional relationships determined in advance with respect to the motion compensation block data MCB (the first motion compensation block data of embodiments of the present invention) for which the predictive motion vector PMV is to be generated have not yet been generated, the predictive vector generation unit 65 uses the already generated 1/4 resolution motion vectors MV63 of the motion compensation block data MCB having the predetermined positional relationships in place of that.

For example, in the example shown in FIG. 7, the processing for generation (1/4 resolution motion prediction) of the motion vector MV63 in the 1/4 resolution MV generation unit 63 for the motion compensation blocks A, B₁, B₂, and B₃, the processing for generation of the predictive motion vector PMV in the predictive vector generation unit 65, and the processing for generation (full resolution motion prediction) of the motion vector MV in the full resolution MV generation unit 64 are pipeline processed at the timing shown in FIG. 13. Namely, at the timing for generating the predictive motion vector PMV of the motion compensation block A, the full resolution motion vectors MV of the motion compensation blocks B₁, B₂, and B₃ have not yet been generated, but the 1/4 resolution motion vectors MV63 of the motion compensation blocks B₁, B₂, and B₃ have been already generated. Accordingly, when the predictive motion vector PMV of the motion compensation block A shown in FIG. 7 is generated, the predictive vector generation unit 65 uses not the full resolution motion vectors MV of the motion compensation blocks B₁, B₂, and B₃, but uses the 1/4 resolution motion vectors MV63 of the motion compensation blocks B₁, B₂, and B₃ which have been already generated by the 1/4 resolution MV generation unit 63.

On the other hand, the predictive vector generation unit 65 uses the full resolution motion vectors MV to generate the predictive motion vector PMV when for example the full resolution motion vectors MV of the motion compensation block data MCB having the predetermined positional relationships determined in advance with respect to the motion compensation block data MCB for which the predictive motion vector PMV is to be generated have been already generated.

Then, the full resolution MV generation unit 64 searches for the full resolution motion vector MV of the motion compensation block data MCB to be processed of the frame data S23 by using the predictive motion vector PMV in the same way as the first embodiment in the search range prescribed by the motion vector MV63 in the reference image data REF.

As explained above, according to the second embodiment of the present invention, when the full resolution motion vectors MV of the second motion compensation block data MCB having positional relationships determined in advance with respect to the first motion compensation block data MCB have not yet been generated, the motion prediction and compensation circuit 46a does not make the motion vectors MV "0", but uses the already generated 1/4 resolution motion vector MV63 for the second motion compensation block data to generate the predictive motion vector PMV of the first motion compensation block data MCB. For this reason, according to the motion prediction and compensation circuit 46a, the predictive motion vectors PMV of all motion compensation block data can be generated, and all motion compensation block data can be adequately encoded.

The present invention is not limited to the above embodiments. In the above first embodiment, as shown in FIG. 7 and FIG. 9, the case where the motion vectors MV of the motion compensation block data C₁, C₂, C₃, and C on the macro block data MB_X side in the macro block data MB_Y and MB_T were used as the third motion compensation block data MCB was exemplified, but motion vectors of the motion compensation block data MCB other than the above in the macro block data MB Y and MB T can be used as well.

Summarizing the effects of embodiments of the invention, there can be provided a data processing apparatus which, when generating a motion vector of first motion compensation block data to be processed in moving picture data by using motion vectors of second motion compensation block data having predetermined positional relationships with respect to the first motion compensation block data, is capable of generating the motion vector of the first motion compensation block data even when the motion vectors of the second motion compensation block data are not yet generated and a method and an encoding device of the same.

In embodiments, a data processing apparatus is provided which is capable of encoding all motion compensation block data, wherein, when generating for example a motion vector MV of a motion compensation block data A in macro block data MB_X, when the motion vectors MV of the motion compensation block data B₁, B₂, and B₃ at the periphery of that are not generated, a predictive vector generation unit of a motion prediction and compensation circuit generates a predictive motion vector PMV of the motion compensation block data A by using already generated motion vectors MV of motion compensation block data C₁, C₂, and C₃ in the adjacent macro block data MB_Y in place of them.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A data processing apparatus for generating a motion vector of a first motion compensation block data to be processed in a moving image data by using a motion vector of a second motion compensation block having a predetermined positional relationship between the first motion compensation block data, said data processing apparatus comprising,
a generating means for generating the motion vector of the first motion compensation block data by using a motion vector of a third motion compensation block data which is already generated and has a predetermined relationship of position between the first motion compensation block data in place of the motion vector of the second motion compensation block data when the motion vector of the second motion compensation block data have not been yet generated at the time of generating the motion vector of the first motion compensation block data.

2. A data processing apparatus of claim 1, wherein
the generating means generates the motion vector of the first motion compensation block data by using the third motion compensation block data positioned at a side of the second motion compensation block data with respect to the first motion compensation block data.

3. A data processing apparatus of claim 1, wherein
the generating means judges whether or not the motion vector of the second motion compensation block data have already been generated, generates the motion vector of the first motion compensation block data by using the motion vector of the second motion compensation block data when the motion vector of the second motion compensation block data have already been generated and generates the motion vector of the first motion compensation block data by using the motion vector of the third motion compensation block data when the motion vector of the second motion compensation block data have not yet been generated.

4. A data processing apparatus of claim 3, wherein
the generating means generates the motion vector by performing a pipeline processing in units of a macro block data constituted by a plurality of motion compensation block data, completes a processing of the first macro block data including the third motion compensation block data, then performs a processing of the second macro block data including the first motion compensation block data and the second motion compensation block data.

5. A data processing apparatus of claim 1, wherein
the macro block data corresponds to each of a two dimensional area poisoned in a form of matrix and defining an image,
the generating means performs a motion compensation of the macro block data for each line constituting the matrix in turn and generates the motion vector of the first motion compensation block data by using the motion vector of the third motion compensation block data in the first macro block data belonging to the second line when the second motion compensation block data is positioned with respect to the first motion compensation block data at the side of the second line to which the motion compensation processing is performed prior to the first line at which the second motion compensation block data is positioned.

6. A data processing apparatus of claim 5, wherein
the generating means generates the motion vector of the first motion compensation block data by using the motion vector of the third motion compensation block data adjacent to the second macro block data in the first macro block data.

7. A data processing apparatus of claim 3, wherein
the macro block data is corresponded to each of a two dimensional area poisoned in a form of matrix and defining an image,
the generating means performs a motion compensation of the macro block data for each line constituting the matrix in turn and generates the motion vector of the first motion compensation block data by using the motion vector of the third motion compensation block data in the first macro block data to which the motion compensation processing is performed prior to the second macro block data and which is positioned adjacent to the second macro block data via a third macro block data when the second motion compensation block data is positioned at a location to which motion compensation processing is performed prior to the first motion compensation block data along with the line.

8. A data processing apparatus of claim 7, wherein
the generating means generates the motion vector of the first motion compensation block data by using the motion vector of the third motion compensation block data in the first macro block data adjacent to the third macro block data.

9. A data processing apparatus of claim 1, wherein
the generating means generates a predictive vector of the first motion compensation block data by using the motion vector of the third motion compensation block data and searches the motion vector having a minimum amount of a difference of information between the predictive vector as the motion vector of the first motion compensation block data.

10. A method of data processing for generating a motion vector of a first motion compensation block data to be processed in a moving image data by using a motion vector of a second motion compensation block having a predetermined positional relationship between the first motion compensation block data, said data processing method comprising:
a first step for judging whether or not the motion vector of the second motion compensation block data have not been yet generated at the time of generating the motion vector of the first motion compensation block data;
a second step for generating the motion vector of the first motion compensation block data by using a motion vector of the second motion compensation block data when it decided at the first step that the motion vector of the second motion compensation block data have already been generated; and
a third step for generating the motion vector of the first motion compensation block data by using a motion vector of a third motion compensation block data which is already generated and has a predetermined relationship of position between the first motion compensation block data in place of the motion vector of the second motion compensation block data when it decided at the first step that the motion vector of the second motion compensation block data have not been yet generated

11. An encoding device for encoding a moving image, comprising:
a motion predicting and compensating means for generating a motion vector of a first motion compensation block data in the moving image by using a motion vector of a third motion compensation block data which have already been generated and have a predetermined positional relationship between the first motion compensation block data in place of the motion vector of a second motion compensation block data having a predetermined positional relationship between the first motion compensation block data, when the motion vector of the second motion compensation block data have not been yet generated at the time of generating the motion vector of the first motion compensation block data and generating a predictive image data on the basis of the generated motion vector; and
an encoding means for encoding the motion vector generated by the motion predicting and compensation means and a difference between the moving image data and the predictive image data.

12. A data processing apparatus for generating a motion vector of a first motion compensation block data to be processed in a moving image data by using a motion vector of a second motion compensation block having a predetermined positional relationship between the first motion compensation block data, said data processing apparatus comprising,
a thinning means for thinning a first reference image data to generate a second reference image data, and
a generating means for searching in the second reference image data to generate a first motion vector of the first motion compensation block data and searching in a searching range prescribed by the first motion vector in the first reference image data to generate a second motion vector of the first motion compensation block data,
the generating means generating the second motion vector of the first motion compensation block data by using the second motion vector of the second motion compensation block data when the second motion vector have already been generated and generates the second motion vector of the first motion compensation block data by using the first motion vector of the second motion compensation block data.

13. A method of data processing for generating a motion vector of a first motion compensation block data to be processed in a moving image data by using a motion vector of a second motion compensation block having a predetermined positional relationship between the first motion compensation block data, the method comprising,
a first step thinning a first reference image data to generate a second reference image data;
a second step for searching in the second reference image data generate by the first step to generate a first motion vector of the first motion compensation block data; and
a third step for searching in a searching range prescribed by the first motion vector generated by the second step in the first reference image data to generate a second motion vector of the first motion compensation block data;
in the third step, the second motion vector of the first motion compensation block data being generated by using the second motion vector of the second motion compensation block data when the second motion vector have already been generated and the second motion vector of the first motion compensation block data is generated by using the first motion vector of the second motion compensation block data.

14. An encoding device for generating a motion vector of a first motion compensation block data to be processed in a moving image data by using a motion vector of a second motion compensation block having a predetermined positional relationship between the first motion compensation block data and encoding the moving image data by using the motion vector, the encoding device comprising,
a thinning means for thinning a first reference image data to generate a second reference image data;
a generating means for searching in the second reference image data to generate a first motion vector of the first motion compensation block data and searching in a searching range prescribed by the first motion vector in the first reference image data to generate a second motion vector of the first motion compensation block data; and
a predictive image generating means for generating a predictive image data on the basis of the second motion vector generated by the generating means; and
an encoding means for encoding the second motion vector generated by generating means and a difference between the moving image data and the predictive image data by the predictive image generating means;
the generating means generating the second motion vector of the first motion compensation block data by using the second motion vector of the second motion compensation block data when the second motion vector have already been generated and generates the second motion vector of the first motion compensation block data by using the first motion vector of the second motion compensation block data.
